**Europäisches Patentamt**

**European Patent Office**

**Office européen des brevets**

(11) Numéro de publication : **0 430 753 B1**

(12) **FASCICULE DE BREVET EUROPEEN**

(45) Date de publication du fascicule du brevet :
**12.07.95 Bulletin 95/28**

(51) Int. Cl.$^6$ : **G05B 13/04**

(21) Numéro de dépôt : **90403245.5**

(22) Date de dépôt : **16.11.90**

(54) **Technique de détermination de la relation optimale variables/propriétés dans un procédé et/ou une composition.**

(30) Priorité : **23.11.89 FR 8915413**

(43) Date de publication de la demande :
**05.06.91 Bulletin 91/23**

(45) Mention de la délivrance du brevet :
**12.07.95 Bulletin 95/28**

(84) Etats contractants désignés :
**AT BE CH DE DK ES FR GB GR IT LI LU NL SE**

(56) Documents cités :
**FR-A- 1 537 661**
**CHEMICAL ENGINEERING juin 1957, NEW YORK US pages 284 - 286; R. HOOKE: "CONTROL BY AUTOMATIC EXPERIMENTA- TION"**

(73) Titulaire : **ELF ATOCHEM S.A.**
**4 & 8, Cours Michelet**
**La Défense 10**
**F-92800 Puteaux (FR)**

(72) Inventeur : **Mozzo, Gilbert**
**Le Crouloup,**
**Quincieux**
**F-69650 Saint-Germain au Mond D'Or (FR)**

(74) Mandataire : **Rochet, Michel et al**
**ELF ATOCHEM S.A.**
**Département Propriété Industrielle**
**4-8, Cours Michelet**
**La Défense 10 - Cedex 42**
**F-92091 Paris-La-Défense (FR)**

EP 0 430 753 B1

## Description

Les processus industriels mettent en jeu un nombre important de variables qui sont, notamment, des paramètres de composition des matières premières utilisées et/ou des facteurs de réglage caractéristiques de la mise en oeuvre.

Généralement, on cherche à privilégier une propriété propre au procédé ou au produit et on tente de trouver la meilleure combinaison de variables permettant de parvenir au but recherché. La situation se complique bien évidemment à mesure que croît le nombre de variables mises en jeu pour peu que croisse également le nombre de propriétés concernées. Si on souhaite quadriller l'espace des variables pour évaluer incidence sur plusieurs propriétés, on arrive très vite, même avec l'aide de l'informatique, à des temps de calcul rendant cette étude impossible. A titre d'information, pour obtenir une précision de $10^{-3}$ sur le domaine de variation, et avec l'aide d'un microordinateur dont la vitesse de calcul est de 5/100° de seconde par point calculé, on constate que pour un calcul complet mettant en jeu 4 variables, il faut effectuer $10^{12}$ calculs élémentaires (1000 niveaux à chacune ces variables puis combinaison de tous les niveaux possibles de toutes les variables) soit 1600 ans d'utilisation du microordinateur.

L'invention propose une technique de détermination de la relation optimale variables/propriétés, cette technique étant telle qu'on ne sorte pas par construction du domaine de calcul préalablement choisi.

L'invention propose également une technique permettant de fixer à l'avance le nombre de calculs élémentaires et, en conséquence, le temps nécessaire pour parvenir à la solution désirée.

D'autres avantages de la technique faisant l'objet de l'invention apparaîtront à la lecture de ce qui suit.

L'invention a donc pour objet un procédé de détermination de la relation optimale variable/propriété d'un processus industriel et en particulier la détermination de la composition d'un produit mettant en jeu k variables X influant sur p propriétés Y, tel que défini dans la revendication 1.

Pour des raisons évidentes de simplification, et pour faciliter la compréhension, l'hypercube du domaine expérimental peut avoir pour cotes -1 et +1, le premier hypercube de calcul pouvant avoir pour cotes $\frac{-1}{2}$, $\frac{+1}{2}$, le 2° hypercube de calcul pouvant avoir pour cotes $\frac{-1}{4}$, $\frac{+1}{4}$ et ainsi de suite, en prenant chaque fois pour cotes la moitié des cotes de l'hypercube précédant.

Dans la mise en place du procédé de détermination conforme à l'invention, les valeurs successives de $u_i$ peuvent être calculées au moyen de l'algorithme ($A_1$) :

$$u_i = c_i + \frac{D}{2^R} * \frac{1}{N} \left[ E \frac{n-1}{p^k} + 1 \right] * \cos \left[ \left( E \frac{n-1}{p^{i-1}} + (p-2) E \frac{n-1}{p^i} \right) * \frac{\pi}{p-1} \right]$$

où :

. $c_i$ désigne les coordonnées du centre de l'hypercube R où se déroule le calcul ;

. $\frac{D}{2^R}$ désigne l'amplitude du calcul partiel dans l'itération de rang R, D désignant la distance de calcul à partir du centre de l'hypercube expérimental, R correspondant à l'ordre des itérations successives et prenant par conséquent les valeurs 1, 2, 3 ... $R_{max}$ ;

.

$$\frac{1}{N} \left[ E \frac{n-1}{p^k} + 1 \right]$$

désigne le dimensionnement des hypercubes gigognes dans l'espace R, N désignant le nombre d'hypercubes gigognes, E indiquant qu'on ne retient que la partie entière de la fraction qui suit, k désignant le nombre de variables prises en considération, n représentant le pas de calcul dans chaque hypercube R, et variant de 1 à $Np^k$, p désignant le nombre de points calculés sur chaque arête de l'hypercube ;

.

$$\cos \left[ \left( E \frac{n-1}{p^{i-1}} + (p-2) E \frac{n-1}{p^i} \right) * \frac{\pi}{p-1} \right]$$

désignant les coordonnées de chaque point exploré dans les hypercubes gigognes, E ayant la signification donnée précédemment et i désignant le numéro de la variable, variant de 1 à k.

Si on effectue les calculs à partir du centre du domaine expérimental, on retiendra $C_i = 0$ pour la première itération (R = 1).

Si on effectue les calculs à partir d'un autre point, on retiendra :

$$c_i = \frac{BS + BI}{Xmax - Xmin}$$

avec Xmax et Xmin pour désigner les valeurs de variables constituant les limites du domaine expérimental et BS et BI les bornes du domaine de calcul.

Si le calcul est strictement limité au domaine expérimental, D = 1. On pourra de la même manière explorer des solutions plus proches du centre (D<1) ou extrapoler avec D>1.

Il ressort des explications précédentes que, sous une forme simplifiée (cas où on ne crée pas d'hypercubes gigognes et où on ne calcule que les $2^k$ sommets des différents hypercubes) A1 peut s'écrire ($A_2$) :

$$u_i = c_i + \frac{1}{2^R} \cos \left[ E \frac{n-1}{2^{i-1}} * \pi \right]$$

De même si on forme des hypercubes gigognes en ne retenant que les sommets desdits hypercubes (2 points par arête), l'algorithme pourra s'écrire ($A_3$):

$$u_i = c_i + \frac{1}{2^R} * \frac{1}{N} \left[ E \frac{n-1}{2^k} + 1 \right] * \cos \left[ E \frac{n-1}{2^{i-1}} * \pi \right]$$

De même si on veut étudier l'influence d'un très grand nombre de variables en n'explorant que les bornes du domaine expérimental, en procédant à $2^k$ calculs, on pourra utiliser l'algorithme ($A_4$) :

$$u_i = \cos \left[ E \frac{n-1}{2^{i-1}} * \pi \right]$$

Les symboles utilisés dans $A_2$, $A_3$ et $A_4$ ont les significations données précédemment.

Le lecteur aura compris que l'optimisation de la relation variable/propriété peut consister soit dans la mise en évidence d'une ou de la solution exacte (cas où le nombre de propriétés est égal ou inférieur au nombre de variables, soit dans la mise en évidence du meilleur compromis (cas où le nombre de propriétés est supérieur au nombre de variables).

L'objet de l'invention sera illustré à l'aide des figures.

Le problème posé est la détermination du meilleur couple de variables $V_1$ et $V_2$ permettant d'obtenir deux propriétés ayant respectivement pour valeur $P_1* = 50$ et $P_2* = 15$ (valeurs visées).

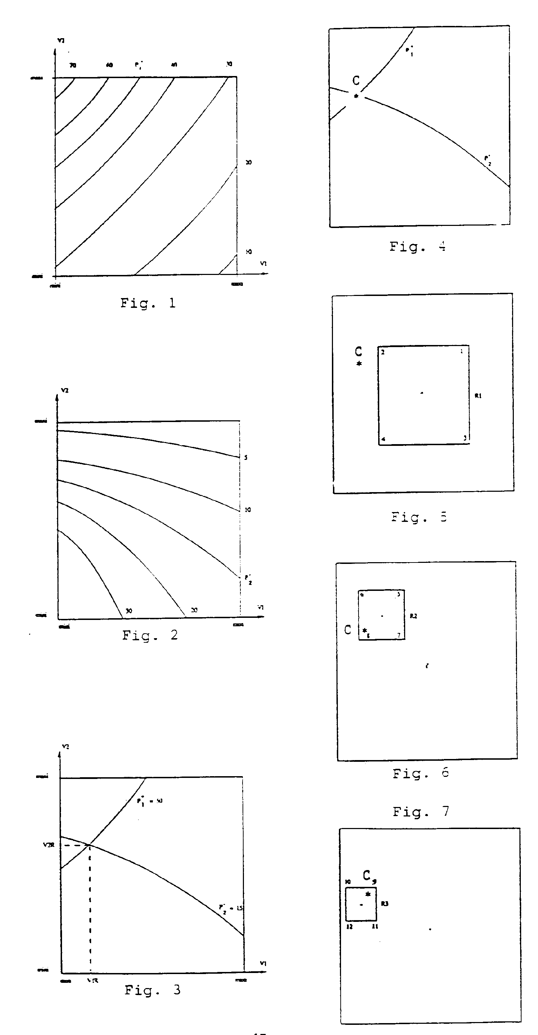

Les figures 1 à 3 sont données à titre comparatif, en s'appuyant sur des calculs traditionnels.

Sur la figure 1, on indique les courbes de niveau de P1 en fonction de $V_1$ et $V_2$ : on constate qu'il existe un grand nombre de couples $V_1$ et $V_2$ donnant $P_1* = 50$.

La figure 2 indique les courbes de niveau de $P_2$ et montre également une pluralité de couples donnant $P_2* = 15$. La superposition des figures 1 et 2 (figure 3) permet d'établir les valeurs $V_1R$ et $V_2R$ conduisant au résultat cherché.

On constate d'une part que l'établissement des diverses courbes de niveau a nécessité un grand nombre de calculs élémentaires et, d'autre part, que cette technique est d'autant plus difficile à mettre en oeuvre que le nombre de variables est élevé, la superposition d'un grand nombre de graphiques devenant impossible.

Les figures 4 à 8 illustrent le procédé de l'invention.

La figure 4 permet de visualiser les valeurs choisies ($P_1* = 50$ ; $P_2* = 15$) : (point C).

La figure 5 illustre le 1° stade du calcul : le carré représentant le domaine expérimental, on calcule, pour quatre points situés à mi-distance entre le centre du domaine et les quatre sommets du carré, les valeurs des propriétés. On les compare aux propriétés visées (C) et retient la solution la plus proche de C.

Au 2° stade (figure 6), on part de la meilleure solution trouvée à l'étape précédente (sommet du carré la plus proche de C) et renouvelle le calcul avec le pas de calcul précédent divisé par 2. On forme un nouveau carré dont l'un des sommets est plus proche de C qu'à la deuxième étape.

Au 3° stade (figure 7), on effectue à nouveau le calcul à partir du nouveau sommet retenu et avec un pas de calcul à nouveau divisé par 2.

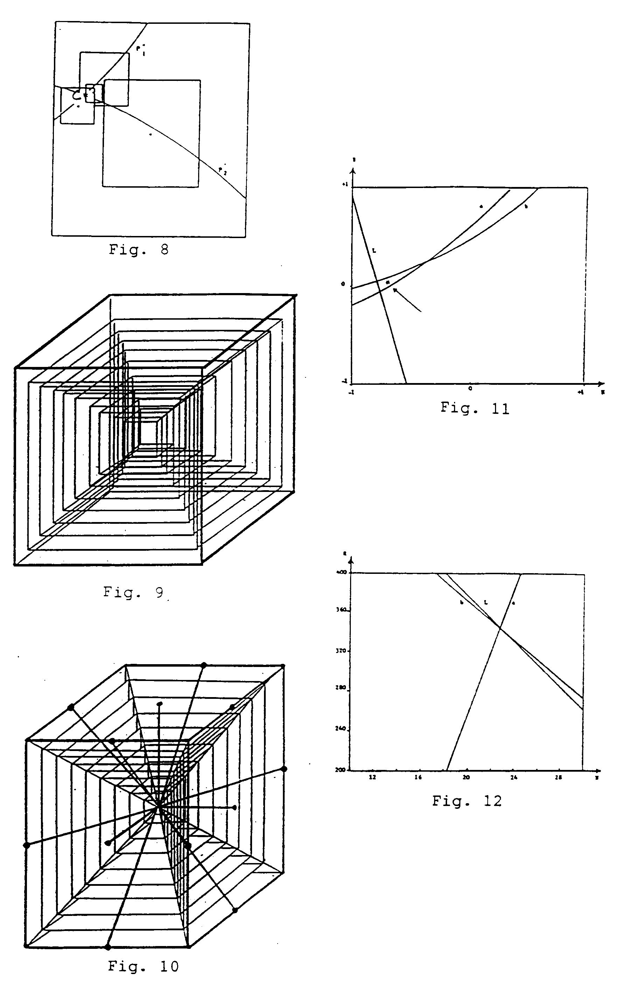

La figure 8 illustre globalement l'algorithme en représentant 4 itérations, sachant que 9 itérations permettent de parvenir à une précision de $10^{-3}$.

Les figures 9 et 10 sont des représentations de cubes gigognes (figure 9), avec balayage des centres des arêtes et des centres des faces (figure 10).

La méthode de détermination de la relation optimale variables/propriétés telle que définie ci-avant, et qui fait appel à la succession d'hypercubes et plus précisément qui met en oeuvre l'algorithme ($A_1$, $A_2$, $A_3$ ou $A_4$) permet, ainsi qu'il a été précisé, de parvenir à cette relation optimale en fixant, par construction, le domaine du calcul et le nombre de calculs, c'est-à-dire le temps nécessaire pour parvenir au résultat souhaité. A titre purement indicatif, avec le microordinateur mentionné plus haut, la mise en oeuvre de 4 variables nécessite un temps de calcul de 8 secondes (à comparer aux 1600 ans), toujours pour une précision de $10^{-3}$. Ce nombre total de calculs élémentaires est donné par la formule générale :

$$Q = R_{max} * N * p^k$$

dans laquelle R max représente le nombre d'itérations (par exemple R max = 9 correspond à une précision de $10^{-3}$ sur la variation du domaine), N, p et k ayant été définis précédemment.

Cette méthode est utilisable dans un grand nombre de domaines et d'applications industriels, qu'il s'agisse de la mise en oeuvre de procédés, qu'il s'agisse de la préparation de compositions ou de formulations, qu'il s'agisse d'optimiser les conditions de fabrication ou de traitement de matériaux divers, d'étudier l'influence d'impuretés, par exemple en analyse spectroscopique ou encore dans la transformation de produits divers, par exemple de matière plastique en particulier en optimisant les paramètres de réglage d'une extrudeuse compte tenu des propriétés souhaitées pour l'extrudat.

Les exemples suivants sont donnés à titre purement indicatif.

## EXEMPLE 1

L'objectif est de réaliser un gris dont les coordonnées trichromatiques ont pour valeur :

L = 63 : L = brillance variant de 0 (noir) à 100 (blanc)

a = - 2.05 : a = axe vert-rouge (- ; +)

b = - 3.83 : b = axe bleu-jaune (- ; +)

Une telle teinte peut être obtenue en mélangeant 2 pigments : un noir et un bleu.

Pour atteindre rapidement l'objectif, on met en oeuvre un plan $2^2$ avec les niveaux suivants :

pigment noir :     niveau mini (-1) = 50 ppm

niveau maxi (+1) = 500 ppm

pigment bleu :     niveau mini (-1) = 200 ppm

niveau maxi (+1) = 2000 ppm

On mesure pour chaque condition d'essai les valeurs de 3 propriétés concernées :

| Essai | Noir (N) | Bleu (B) | L | a | b |
|---|---|---|---|---|---|
| 1 | - | - | 66.01 | - 1.27 | - 0.87 |
| 2 | - | + | 62.88 | - 3.25 | - 7.01 |
| 3 | + | - | 53.27 | - 0.55 | - 0.41 |
| 4 | + | + | 51.24 | - 1.44 | - 2.96 |

Le calcul classique à partir du plan d'essai conduit aux 3 modèles ci-dessous dont l'écriture en minuscule rappelle qu'il s'agit des variables explicatives codées :

L = 58.35 - 6.095 n - 1.290 b + 0.275 nb

a = - 1.63 + 0.633 n - 0.718 b + 0.273 nb

b = - 2.81 + 1.128 n - 2.173 b + 0.898 nb

On voit que chacune des composantes trichromatiques est influencée par les 2 pigments utilisés. Etant

4

donné qu'on met en jeu 3 propriétés pour 2 variables, on sait qu'il n'existe pas de solution exacte (cela ressort de la superposition des 3 isoréponses visées, tracées dans le plan des variables - figure 11 : sur cette figure, le point fléché désigne l'objectif).

Le calcul d'optimisation donne en 2 secondes la meilleure solution avec seulement 36 calculs (R max = 9, N = 1, p = 2 et k = 2) :

|   | Valeur visée | Valeur de compromis |
|---|---|---|
| L | 63 | 62.895 |
| a | − 2.05 | − 2.110 |
| b | − 3.83 | − 3.684 |

On constate, au niveau du calcul, que la moins mauvaise solution est acceptable puisqu'elle conduit à un écart de teinte $\Delta E = 0.19$, alors que l'oeil n'a pas cette sensibilité de perception.

Les niveaux des variables calculées pour la technique de l'invention, respectivement 69 ppm pour le noir et 1257 ppm pour le bleu, ont été retenus pour réaliser la teinte, jugée acceptable par le coloriste.

## EXEMPLE 2

L'objectif à atteindre est défini par les coordonnées trichromatiques :

L = 50.44
a = 27.24
b = 29.21

Trois pigments sont utilisés pour réaliser la teinte souhaitée (marron soutenu), avec les taux mini et maxi suivants :

|   | Taux mini | Taux maxi |
|---|---|---|
| Noir | 10 ppm | 30 ppm |
| Rouge | 200 ppm | 400 ppm |
| Jaune | 500 ppm | 1000 ppm |

Etant donné le coût des essais qui impliquent un mélange, une granulation puis un malaxage sur cylindres, on a décidé de les réduire le plus possible, et on a donc mis en oeuvre un plan fractionnaire $2^{(3-1)}$, dont les résultats sont :

| Essai | N | R | J | L | a | b |
|-------|---|---|---|-------|-------|-------|
| 1 | + | + | + | 47.27 | 24.31 | 25.62 |
| 2 | + | − | − | 52.49 | 21.68 | 28.30 |
| 3 | − | − | + | 56.90 | 31.21 | 40.10 |
| 4 | − | + | − | 52.45 | 34.96 | 29.24 |

La modélisation conduit aux équations codées :

$L = 52.28 - 2.40\ n - 2.42\ r - 0.19\ j$

$a = 20.04 - 5.05\ n + 1.59\ r - 0.28\ j$

$b = 30.82 - 3.85\ n - 3.39\ r + 2.04\ j$

Pour le calcul d'optimisation, on a retenu p=3 et N=3 en vue d'obtenir une meilleure précision de calcul, et au terme de 729 calculs élémentaires on aboutit aux résultats suivants :

| | Valeurs visées | Valeurs calculées |
|---|---|---|
| L | 50.44 | 50.435 |
| a | 27.24 | 27.238 |
| b | 29.21 | 29.214 |

Les quantités de pigments à utiliser pour atteindre l'objectif, sont d'après le calcul d'optimisation, en valeurs brutes :

Noir : 23 ppm

Rouge : 345 ppm

Jaune : 871 ppm

La réalisation effective a donné un résultat très proche de ce qui était visé, soit :

$L = 50.45$

$a = 27.18$

$b = 28.81$

On poursuit le calcul en ne faisant évoluer que l'axe rouge seul, les deux autres coordonnées trichromatiques restant constantes.

| Valeurs visées | | | Valeurs trouvées | | | N | R | J |
|---|---|---|---|---|---|---|---|---|
| L | a | b | L | a | b | | | |
| 50.44 | 25.5 | 29.21 | 50.539 | 25.515 | 29.029 | 25 | 316 | 848 |
| " | 26.0 | " | 50.440 | 26.000 | 29.210 | 25 | 326 | 879 |
| " | 26.5 | " | 50.440 | 26.499 | 29.210 | 24 | 334 | 875 |
| " | 27.0 | " | 50.440 | 27.001 | 29.211 | 23 | 341 | 871 |
| " | 27.5 | " | 50.440 | 27.499 | 29.211 | 22 | 349 | 861 |
| " | 28.0 | " | 50.440 | 27.998 | 29.209 | 21 | 356 | 863 |
| " | 28.5 | " | 50.514 | 28.503 | 29.070 | 21 | 361 | 859 |
| " | 29.0 | " | 50.460 | 28.998 | 29.170 | 20 | 370 | 847 |

L'examen du tableau qui précède montre que pour parvenir à l'objectif qui est ici d'augmenter la seule valeur de a de 26 à 28.5, il faut <u>simultanément</u> :

. diminuer le noir de 25 à 21 ppm

. augmenter le rouge de 326 à 361 ppm

. diminuer le jaune de 879 à 859 ppm

(si l'on désire demeurer à l'intérieur du domaine expérimental). Au-delà des limites définies par 26 < a < 28,5, le calcul d'optimisation montre qu'il n'existe pas de solution exacte dans le domaine expérimental.

Il faut noter qu'une telle teinte est difficile à réaliser, puisque des variations minimes de pigments font bouger cette teinte au delà de ce que décèle l'oeil : celui-ci perçoit un écart de 0.5 sur $\Delta$ a, ce qui correspond aux variations suivantes :

Noir : 1 ppm environ (4 %)

Rouge : 7 ppm environ (2 %)

Jaune : 4 ppm environ (0.5 %)

Le tracé des courbes isoréponses (figure 12) pour l'objectif initial, dans le plan Noir - Rouge - pour jaune = 870 ppm, illustre bien à la fois :

. la sensibilité de la teinte aux faibles variations de concentrations

. la nécessité de calculer avec une extrême précision puisque l'angle entre les plans b et L est faible.

## EXEMPLE 3

Dans le but d'optimiser 4 propriétés d'un tissu enduit, on a pratiqué un plan d'expérience mettant en jeu 3 variables qui sont respectivement :

A = pourcentage d'additif de traitement

T = température de traitement

H = humidité du tissu à traiter

Les propriétés à optimiser sont les suivantes :

ADH = adhérence du revêtement

DCH = résistance du tissu, sens chaîne

DTR = résistance du tissu, sens trame

RF = résistance au frottement (note sur 20)

Pour simplifier, les valeurs réelles des variables sont remplacés par leurs niveaux codés (-1, +1).

**Plan d'essai et résultat obtenus**

| VARIABLES | | | PROPRIETES | | | |
|---|---|---|---|---|---|---|
| A | T | H | ADH | DCH | DTR | RF |
| +1 | -1 | -1 | 5.3 | 1.00 | 1.08 | 14 |
| -1 | -1 | -1 | 5.6 | 1.15 | 1.40 | 4 |
| +1 | +1 | -1 | 7.3 | 0.90 | 1.18 | 18 |
| -1 | +1 | -1 | 6.0 | 1.18 | 1.40 | 12 |
| +1 | -1 | +1 | 8.2 | 0.95 | 1.30 | 12 |
| -1 | -1 | +1 | 5.7 | 1.20 | 1.55 | 6 |
| +1 | +1 | +1 | 8.5 | 0.85 | 1.30 | 16 |
| - | +1 | +1 | 6.1 | 1.35 | 1.50 | 10 |

On notera, à la lecture du tableau ci-dessus, que la valeur maximale de chaque propriété correspond chaque fois à une combinaison différente des variables.

On va rechercher progressivement des solutions de plus en plus performantes, pour l'ensemble des 4 propriétés mesurées.

Les modèles retenus comportent à la fois les actions principales des variables et leurs interactions deux à deux.

$$ADH = 6.59 + 0.74\,a + 0.39\,t + 0.54\,h + 0.19\,at + 0.49\,ah - 0.21\,th$$
$$DCH = 1.07 - 0.15\,a - 0.003\,t + 0.016\,h - 0.047\,at - 0.041\,ah + 0.016\,th$$
$$DTR = 1.34 - 0.12\,a + 0.006\,t + 0.074\,h - 0.018\,at + 0.012\,ah - 0.018\,th$$
$$RF = 11.5 + 3.5\,a + 2.5\,t - 0.5\,h - 0.5\,at - 0.5\,ah - 0.5\,th$$

Le tableau suivant donne les résultats des différents calculs pour les objectifs successifs.

Afin de vérifier, la cohérence des données, on a également calculé l'optimisation pour les valeurs moyennes, identiques aux constantes des équations centrées qui précèdent. On retrouve bien sûr dans ce cas que le niveau de toutes les variables est égal à 0.

| VALEURS VISEES | | | | VALEURS TROUVEES | | | | VARIABLES | | |
|---|---|---|---|---|---|---|---|---|---|---|
| ADH | DCH | DTR | RF | ADH | DCH | DTR | RF | A | T | H |
| 5 | 0.9 | 1.0 | 6 | 5.5 | 1.04 | 1.14 | 11.8 | 0.63 | -1 | -1 |
| 5.5 | 0.95 | 1.05 | 8 | 5.5 | 1.04 | 1.14 | 11.8 | 0.63 | -1 | -1 |
| 6 | 1.0 | 1.1 | 10 | 5.8 | 1.02 | 1.15 | 12.1 | 0.72 | -1 | -0.75 |
| 6.5 | 1.05 | 1.15 | 12 | 6.3 | 1.00 | 1.18 | 12.5 | 0.84 | -1 | -0.33 |
| 7 | 1.1 | 1.2 | 14 | 6.6 | 1.01 | 1.26 | 14.3 | 0.24 | 0.53 | -0.75 |
| 7.5 | 1.15 | 1.25 | 15 | 7.1 | 1.04 | 1.33 | 14.4 | 0.13 | +1 | 0 |
| 8 | 1.2 | 1.3 | 16 | 7.4 | 1.06 | 1.37 | 13.6 | 0.14 | +1 | 0.72 |
| 8.5 | 1.25 | 1.35 | 18 | 7.5 | 1.06 | 1.38 | 13.4 | 0.18 | +1 | 1 |
| 9 | 1.3 | 1.4 | 20 | 7.6 | 1.05 | 1.38 | 13.5 | 0.21 | +1 | 1 |
| VALEURS MOYENNES | | | | | | | | | | |
| 6.58 | 1.07 | 1.34 | 11.5 | 6.58 | 1.07 | 1.34 | 11.5 | 0 | 0 | 0 |

On peut tirer du tableau qui précède les conclusions pratiques suivantes lorsque l'on cherche à améliorer simultanément l'ensemble des 4 propriétés :

. il convient à la fois pour les variables :
- de mettre peu d'additif
- d'augmenter la température de traitement
- de travailler avec le taux maximal d'humidité

. pour les propriétés, on notera :
- que la résistance au déchirement dans le sens de la chaîne demeure pratiquement constante
- que s'il est possible d'augmenter simultanément la résistance au déchirement dans le sens de la trame et l'adhérence, propriétés pour lesquelles on peut s'approcher des valeurs maximales expérimentales, il n'en va pas de même pour la résistance au froissement : on est limité à une valeur de 13.5 du fait du compromis souhaité.

**Revendications**

1. Procédé de détermination de la relation optimale entre les variables et les propriétés d'un processus industriel et en particulier la détermination de la composition d'un produit mettant en jeu k variables X influant sur p propriétés Y, procédé comprenant les opérations suivantes :
- à partir d'un plan d'essai et/ou par l'analyse de données, établissement des équations de réponse :
$$\underline{Y}j = f(u_i)$$
- choix d'une valeur Yj*
- calcul de la valeur minimum de

$$\delta^2 = \sum_{1}^{j} (\underline{v}j - vj^*)^2$$

formules dans lesquelles Yj désigne la valeur numérique de la propriété Y de numéro j
Yj* : la valeur pondérée de Yj (valeur visée)
$\underline{Y}j$ : la valeur pondérée de $\underline{Y}j$ donnée par le modèle de régression $f(u_i)$
vj* : la valeur pondérée codée de Yj*
vj : la valeur pondérée codée de $\underline{Y}j$
$u_i$ : la valeur pondérée codée de la variable de valeur numérique X de numéro i ($X_i$)

9

les pondérations étant obtenues par les équations

$$v_j = 2 \frac{\overline{Y_j} - Y_j}{Y_{jmax} - Y_{jmin}}$$

et

$$u_i = 2 \frac{\overline{X_i} - X_i}{X_{imax} - X_{imin}}$$

$\overline{Y_j}$ désignant la valeur moyenne de la propriété et $\overline{X_i}$ la valeur moyenne de la variable, $Y_{jmax}$ et $Y_{jmin}$ désignant les valeurs réelles extrêmes des propriétés dans le domaine expérimental, $X_{imax}$ et $X_{imin}$ désignant les valeurs réelles extrêmes des variables dans le domaine expérimental, $Y_j$ désignant la valeur réelle de la propriété et $X_i$ la valeur réelle de la variable, caractérisé en ce qu'il consiste à générer un hypercube expérimental des variables codées constituant le domaine expérimental, à effectuer les calculs de $v_j$ pour les valeurs de $u_i$ correspondant aux $2^k$ sommets d'un l'hypercube de calcul ($R_1$) dont les cotes sont une fraction des cotes des variables codées de l'hypercube expérimental puis de $\delta^2$, le sommet donnant la plus faible valeur de $\delta^2$ devenant le centre d'un nouvel hypercube de calcul ($R_2$) dont les cotes sont à nouveau une fraction des cotes de l'hypercube de calcul ($R_1$) précédent, et ainsi de suite jusqu'à obtenir la valeur minimum de $\delta^2$, tout ou partie des calculs précédents étant effectués à l'aide d'un calculateur tel qu'un microordinateur.

**2.** Procédé selon la revendication 1, caractérisée en ce que l'hypercube du domaine expérimental est coté -1, +1, le premier hypercube de calcul est noté $\frac{-1}{2}, \frac{+1}{2}$, le deuxième $\frac{-1}{4}, \frac{+1}{4}$ et ainsi de suite.

**3.** Procédé selon l'une quelconque des revendications 1 et 2, caractérisée en ce que les valeurs successives de $u_i$ sont déterminées au moyen de l'algorithme $A_1$ :

$$u_i = C_i + \frac{D}{2^R} * \frac{1}{N} \left[ E \frac{n-1}{p^k} + 1 \right] * \cos \left[ (E \frac{n-1}{p^{i-1}} + (p-2) E \frac{n-1}{p^i}) * \frac{\pi}{p-1} \right]$$

où :

. $C_i$ désigne les coordonnées du centre de l'hypercube R où se déroule le calcul ;

. $\frac{D}{2^R}$ désigne l'amplitude du calcul partiel dans l'itération de rang R, D désignant la distance de calcul à partir du centre de l'hypercube expérimental, R correspondant à l'ordre des itérations successives et prenant par conséquent les valeurs 1, 2, 3 ... $R_{max}$ ;

.

$$\frac{1}{N} \left[ E \frac{n-1}{p^k} + 1 \right]$$

désigne le dimensionnement des hypercubes gigognes dans l'espace R, N désignant le nombre d'hypercubes gigognes, E indiquant qu'on ne retient que la partie entière de la fraction qui suit, k désignant le nombre de variables prises en considération, n représentant le pas de calcul dans chaque hypercube R, et variant de 1 à $Np^k$, p désignant le nombre de points calculés sur chaque arête de l'hypercube ;

.

$$\cos \left[ (E \frac{n-1}{p^{i-1}} + (p-2) E \frac{n-1}{p^i}) * \frac{\pi}{p-1} \right]$$

désignant les coordonnées de chaque point exploré dans les hypercubes gigognes, E ayant la signification donnée précédemment et i désignant le numéro de la variable, variant de 1 à k.

4. Procédé selon l'une quelconque des revendications 1 à 3, caractérisée en ce que les valeurs successives de $u_i$ sont déterminées au moyen de l'algorithme $A_2$

$$u_i = c_i + \frac{1}{2^R} \cos \left[ E \frac{n-1}{2^{i-1}} * \pi \right]$$

5. Procédé selon l'une quelconque des revendications 1 à 3, caractérisée en ce que les valeurs successives de $u_i$ sont déterminées au moyen de l'algorithme $A_3$

$$u_i = c_i + \frac{1}{2^R} * \frac{1}{N} \left[ E \frac{n-1}{2^k} + 1 \right] * \cos \left[ E \frac{n-1}{2^{i-1}} * \pi \right]$$

6. Procédé selon l'une quelconque des revendications 1 à 3, caractérisée en ce que les valeurs successives de $u_i$ sont déterminées au moyen de l'algorithme $A_4$ :

$$u_i = \cos \left[ E \frac{n-1}{2^{i-1}} * \pi \right]$$

**Patentansprüche**

1. Verfahren zur Ermittlung des optimalen Verhältnisses zwischen den Variablen und den Eigenschaften eines industriellen Verfahrens und insbesondere zur Ermittlung der Zusammensetzung eines Erzeugnisses, wobei k Variable X mit Einfluß auf p Eigenschaften Y verwendet werden, das folgende Schritte umfaßt:
   - Aufstellen der Antwortgleichungen
   $$\underline{Y}j = f(u_i)$$
   ausgehend von einem Versuchsschema und/oder einer Datenanalyse
   - Auswahl eines Wertes Yj*
   - Berechnen des Minimalwertes von

$$\delta^2 = \sum_{1}^{j} (\underline{v}j - vj^*)^2$$

in welchen Formeln Yj den numerischen Wert der Eigenschaft Y mit der Nummer j
Yj* : den gewichteten Wert von Yj (Zielwert)
$\underline{Y}j$ : den gewichteten Wert von $\underline{Y}j$, gegeben durch das Regressionsmodell $f(u_i)$
vj* : den gewichteten kodierten Wert von Yj*
vj : den gewichteten kodierten Wert von $\underline{Y}j$
$u_i$ : den gewichteten kodierten Wert der Variablen mit numerischem Wert X mit Nummer i ($X_i$)
bezeichnet,
wobei die Gewichtungen durch die Formeln

$$vj = 2 \frac{\underline{Yj} - \overline{Yj}}{Yjmax - Yjmin}$$

und

$$u_i = 2 \frac{Xi - \overline{Xi}}{Ximax - Ximin}$$

erhalten werden, wobei $\overline{Y}j$ den Mittelwert der Eigenschaft und $\overline{X}i$ den Mittelwert der Variablen bezeichnen, Yjmax und Yjmin die tatsächlichen Extremwerte der Eigenschaften im experimentellen Bereich bezeichnen, Ximax und Ximin die tatsächlichen Extremwerte der Variablen im experimentellen Bereich bezeichnen, Yj den tatsächlichen Wert der Eigenschaft und Xi den tatsächlichen Wert der Variablen bezeichnet,

dadurch gekennzeichnet, daß
das Verfahren darin besteht, einen experimentellen vieldimensionalen Würfel der kodierten Variablen aufzuspannen, der den experimentellen Bereich darstellt, die Berechnungen von vj für die Werte von $u_i$ durchzuführen, die den $2^k$ Ecken eines vieldimensionalen Berechnungswürfels ($R_1$) entsprechen, dessen Maßzahlen ein Bruchteil der Maßzahlen der kodierten Variablen des experimentellen vieldimensionalen Würfels sind, sodann die Berechnungen von $\delta^2$ durchzuführen, wobei die Ecke, die den kleinsten Wert von $\delta^2$ ergibt, das Zentrum eines neuen vieldimensionalen Berechnungswürfels ($R_2$) wird, dessen Maßzahlen erneut ein Bruchteil der Maßzahlen des überdimensionalen Berechnungswürfels ($R_1$) sind, und so weiter bis der minimale Wert von $\delta^2$ erhalten wird, wobei alle oder Teile der vorstehenden Berechnungen mit Hilfe einer Rechenmaschine wie einem Mikrocomputer durchgeführt werden.

2. Verfahren nach Anspruch 1, dadurch gekennzeichnet, daß der vieldimensionale Würfel des experimentellen Bereichs mit -1, +1 bemessen ist, der erste vieldimensionale Berechnungswürfel mit -1/2, +1/2, der zweite mit -1/4, +1/4 und so weiter.

3. Verfahren nach einem der Ansprüche 1 oder 2, dadurch gekennzeichnet, daß die sukzessiven Werte der $u_i$ bestimmt werden mittels des Algorithmus $A_1$:

$$u_i = c_i + \frac{D}{2^R} * \frac{1}{N} \left[ E \frac{n-1}{p^k} + 1 \right] * \cos \left[ (E \frac{n-1}{p^{i-1}} + (p-2) E \frac{n-1}{p^i}) * \frac{\pi}{p-1} \right]$$

worin:
- $c_i$ die Koordination des Zentrums des vieldimensionalen Würfels R bezeichnet, in welchem sich die Berechnung abspielt;
- $D/2^R$ die Amplitude der Partialberechnung in der Iteration der Stufe R bezeichnet, wobei D den Berechnungsabstand vom Zentrum des experimentellen vieldimensionalen Würfels bezeichnet und R der Folge der sukzessiven Iterationen entspricht und somit die Werte 1, 2, 3 ... $R_{max}$ annimmt;
-

$$\frac{1}{N} \left[ E \frac{n-1}{p^k} + 1 \right]$$

die Dimensionierung der ineinandergeschachtelten überdimensionalen Würfel im Raum R bezeichnet, wobei N die Anzahl der ineinandergeschachtelten vieldimensionalen Würfel bezeichnet, E anzeigt, daß nur der ganzzahlige Anteil des nachfolgenden Bruchs berücksichtigt wird, k die Anzahl der in Betracht gezogenen Variablen bezeichnet, n den Berechnungsschritt in jedem vieldimensionalen Würfel R angibt und von 1 bis $Np^k$ läuft und p die Anzahl der auf jeder Kante des vieldimensionalen Würfels berechneten Punkte bezeichnet;
-

$$\cos \left[ (E \frac{n-1}{p^{i-1}} + (p-2) E \frac{n-1}{p^i}) * \frac{\pi}{p-1} \right]$$

die Koordinaten jedes in den ineinandergeschachtelten vieldimensionalen Würfeln untersuchten Punktes bezeichnet, wobei E die vorstehend angegebene Bedeutung hat, und i die Nummer der Variablen angibt und von 1 bis k läuft.

4. Verfahren nach einem der Ansprüche 1 bis 3, dadurch gekennzeichnet, daß die sukzessiven Werte von $u_i$ bestimmt werden mittels des Algorithmus $A_2$:

$$u_i = c_i + \frac{1}{2^R} \cos \left[ E \frac{n-1}{2^{i-1}} * \pi \right]$$

**5.** Verfahren nach einem der Ansprüche 1 bis 3, dadurch gekennzeichnet, daß die sukzessiven Werte von $u_i$ bestimmt werden mittels des Algorithmus $A_3$:

$$u_i = c_i + \frac{1}{2^R} * \frac{1}{N} \left[ \Sigma \frac{n-1}{2^k} + 1 \right] * \cos \left[ \Sigma \frac{n-1}{2^{i-1}} * \pi \right]$$

**6.** Verfahren nach einem der Ansprüche 1 bis 3, dadurch gekennzeichnet, daß die sukzessiven Werte von $u_i$ bestimmt werden mittels des Algorithmus $A_4$:

$$u_i = \cos \left[ \Sigma \frac{n-1}{2^{i-1}} * \pi \right] .$$

## Claims

**1.** Method for determining the optimal relation between the variables and the properties of an industrial process and in particular for determining the composition of a product involving k variables X influencing p properties Y, which method comprises the following operations:
   - establishing, from a trial design and/or through data analysis, response equations:

$$\underline{Yj} = f(u_i)$$

   - choosing a value Yj*
   - calculating the minimum value of

$$\delta^2 = \sum_{1}^{j} (\underline{vj} - vj^*)^2$$

in which formulae Yj denotes the numerical value of the property Y of index j

Yj*:       the weighted value of Yj (intended value)
$\underline{Yj}$:       the weighted value of Yj given by the regression model $f(u_i)$
vj*:       the coded weighted value of Yj*
$\underline{vj}$:       the coded weighted value of $\underline{Yj}$
$u_i$:       the coded weighted value of the variable with numerical value X and index i $(X_i)$
the weightings being obtained through the equations

$$vj = 2 \frac{Yj - \overline{Yj}}{Yjmax - Yjmin}$$

and

$$u_i = 2 \frac{Xi - \overline{Xi}}{Ximax - Ximin}$$

$\overline{Yj}$ denoting the mean value of the property and Xi the mean value of the variable, Yjmax and Yjmin denoting the extreme actual values of the properties in the experimental domain, Ximax and Ximin denoting the extreme actual values of the variables in the experimental domain, Yj denoting the actual value of the property and Xi the actual value of the variable, characterized in that it consists in generating an experimental hypercube of the coded variables constituting the experimental domain, in performing the calculations of $\underline{vj}$ for the values of $u_i$ corresponding to the $2^k$ vertices of a calculation hypercube $(R_1)$, the dimensions of which are a fraction of the dimensions of the coded variables of the experimental hypercube and then of $\delta^2$, the vertex giving the smallest value of $\delta^2$ becoming the centre of a new calculation hypercube $(R_2)$, the dimensions of which are again a fraction of the dimensions of the calculation hypercube $(R_1)$, and so on until the minimum value of $\delta^2$ is obtained, all or some of the above calculations being performed with the aid of a calculator such as a microcomputer.

**2.** Method according to Claim 1, characterized in that the hypercube of the experimental domain is dimensioned -1, +1, the first calculation hypercube is dimensioned $\frac{-1}{2}, \frac{+1}{2}$, the second $\frac{-1}{4}, \frac{+1}{4}$ and so on.

3. Method according to either one of Claims 1 and 2, characterized in that the successive values of $u_i$ are determined by means of the algorithm $A_1$:

$$u_i = c_i + \frac{D}{2^R} * \frac{1}{N} \left[ E \frac{n-1}{p^k} + 1 \right] * \cos \left[ (E \frac{n-1}{p^{i-1}} + (p-2) E \frac{n-1}{p^i}) * \frac{\pi}{p-1} \right]$$

where :

- $c_i$ denotes the coordinates of the centre of the hypercube R where the calculation is being run;
- $\frac{D}{2^R}$ denotes the magnitude of the partial calculation in the iteration of rank R, D denoting the calculation distance from the centre of the experimental hypercube, R corresponding to the order of the successive iterations and consequently taking the values 1, 2, 3 ... $R_{max}$;
- 

$$\frac{1}{N} \left[ E \frac{n-1}{p^k} + 1 \right]$$

denotes the sizing of the nested hypercubes in the space R, N denoting the number of nested hypercubes, E indicating that only the integer part of the fraction which follows is retained, k denoting the number of variables taken into consideration, n representing the calculation increment in each hypercube R, and varying from 1 to $Np^k$, p denoting the number of points calculated on each edge of the hypercube;

- 

$$\cos \left[ (E \frac{n-1}{p^{i-1}} + (p-2) E \frac{n-1}{p^i}) * \frac{\pi}{p-1} \right]$$

denoting the coordinates of each point explored in the nested hypercubes, E having the meaning given above and i denoting the index of the variable, varying from 1 to k.

4. Method according to any one of Claims 1 to 3, characterized in that the successive values of $u_i$ are determined by means of the algorithm $A_2$

$$u_i = c_i + \frac{1}{2^R} \cos \left[ E \frac{n-1}{2^{i-1}} * \pi \right]$$

5. Method according to any one of Claims 1 to 3, characterized in that the successive values of $u_i$ are determined by means of the algorithm $A_3$

$$u_i = c_i + \frac{1}{2^R} * \frac{1}{N} \left[ E \frac{n-1}{2^k} + 1 \right] * \cos \left[ E \frac{n-1}{2^{i-1}} * \pi \right]$$

6. Method according to any one of Claims 1 to 3, characterized in that the successive values of $u_i$ are determined by means of the algorithm $A_4$

$$u_i = \cos \left[ E \frac{n-1}{2^{i-1}} * \pi \right]$$

Fig. 1

Fig. 2

Fig. 3

Fig. 4

Fig. 5

Fig. 6

Fig. 7

15

Fig. 8

Fig. 9

Fig. 10

Fig. 11

Fig. 12